# EUROPEAN PATENT APPLICATION

(11) **EP 4 761 184 A1**
(43) Date of publication of application: **17.06.2026**
(21) Application number: 24861878.7
(22) Date of filing: 28.08.2024
(51) Int. Cl.: H04L 12/02, H04L 47/76

(54) **RESOURCE ADJUSTMENT METHOD AND APPARATUS, NETWORK DEVICE, AND STORAGE MEDIUM**

(30) Priority: 06.09.2023 CN 202311161639
(71) Applicant: HUAWEI TECHNOLOGIES CO., LTD., Shenzhen 518129 (CN)
(72) Inventor: YANG, Wenbin, Shenzhen, Guangdong 518129 (CN); ZHANG, Xiongwei, Shenzhen, Guangdong 518129 (CN); YANG, Xiuying, Shenzhen, Guangdong 518129 (CN)
(74) Representative: Körber, Martin Hans
(86) International application number: PCT/CN2024/115187
(87) International publication number: WO 2025/051034

(57) **Abstract**

This application pertains to the communication field, and discloses a resource adjustment method and apparatus, a network device, and a storage medium. The method includes: obtaining a current traffic load rate of a target network entity, where the current traffic load rate indicates a load condition of the target network entity during forwarding of current network traffic, and the target network entity is a plurality of interface boards, a plurality of switch fabric units, or any one of a plurality of interface boards; determining, based on the current traffic load rate, a resource adjustment policy corresponding to the current network traffic, where the resource adjustment policy indicates an adjustment of traffic forwarding resources in the network device during forwarding of the current network traffic, and the traffic forwarding resources include serial links of the switch fabric units and the interface boards; and adjusting the traffic forwarding resources in the network device based on the resource adjustment policy. In this application, the traffic forwarding resources are dynamically adjusted, so that overall power consumption of the network device varies with network traffic, and that power requirements and heat dissipation requirements of the network device under low traffic load are reduced.

## Description

This application claims priority to Chinese Patent Application No. 202311161639.3, filed on September 6, 2023 and entitled "RESOURCE ADJUSTMENT METHOD AND APPARATUS, NETWORK DEVICE, AND STORAGE MEDIUM", which is incorporated herein by reference in its entirety.

### TECHNICAL FIELD

This application relates to the communication field, and in particular, to a resource adjustment method and apparatus, a network device, and a storage medium.

### BACKGROUND

Network devices are configured to forward network traffic within a network. Generally, such a network device includes a plurality of interface boards and a plurality of switch fabric units. Each of the interfaces board is connected to the switch fabric units via a plurality of serial links, allowing network traffic to be forwarded among different interface boards via the switch fabric units. Therefore, the greater number of switch fabric units a network device includes, the more network traffic the device can forward. For any interface board, the more serial links the interface board possesses, the more network traffic the interface board can forward.

Theoretically, the more network traffic forwarded by the network device indicates a higher traffic load rate of the network device, and higher power consumption of the network device. Conversely, the less network traffic forwarded by the network device indicates a lower traffic load rate of the network device, and lower power consumption of the network device. The traffic load rate indicates a load condition of the network device during network traffic forwarding.

However, under an extremely low traffic load condition, the network device may still have significant heat dissipation and power requirements. Therefore, how to reduce power consumption of the network device becomes an urgent problem to be resolved currently.

### SUMMARY

This application provides a resource adjustment method and apparatus, a network device, and a storage medium, to dynamically adjust traffic forwarding resources in the network device based on a current traffic load rate of a target network entity, so that overall power consumption of the network device varies with network traffic, and that power requirements and heat dissipation requirements of the network device under low traffic load are reduced. The technical solutions are as follows:
According to a first aspect, a resource adjustment method is provided, and applied to a resource manager in a network device, where the network device further includes each of the interface boards is connected to at least one of the switch fabric units via at least one serial link, and the switch fabric unit is configured to forward network traffic of one interface board to another interface board; and the method includes: obtaining a current traffic load rate of a target network entity, where the current traffic load rate indicates a load condition of the target network entity during forwarding of current network traffic, and the target network entity is the plurality of interface boards, the plurality of switch fabric units, or any one of the plurality of interface boards; determining, based on the current traffic load rate, a resource adjustment policy corresponding to the current network traffic, where the resource adjustment policy indicates an adjustment of traffic forwarding resources in the network device during forwarding of the current network traffic, and the traffic forwarding resources include serial links of the switch fabric units and the interface boards; and adjusting the traffic forwarding resources in the network device based on the resource adjustment policy.

It can be learned that the resource manager determines, based on the current traffic load rate of the target network entity, the resource adjustment policy corresponding to the current network traffic, and then adjusts, based on the resource adjustment policy, the traffic forwarding resources that are in the network device and that are used to forward the current network traffic. In this way, the traffic forwarding resources in the network device are dynamically adjusted based on the current traffic load rate of the target network entity, so that overall power consumption of the network device can vary with the current network traffic. This avoids running of plenty of traffic forwarding resources under a low traffic load condition, thereby reducing power requirements and heat dissipation requirements of the network device under low traffic load while meeting a current network traffic forwarding requirement.

Optionally, the target network entity includes the plurality of interface boards or the plurality of switch fabric units, the resource adjustment policy includes a first adjustment policy and a second adjustment policy, the first adjustment policy indicates a decrease in a quantity of enabled switch fabric units in the network device, and the second adjustment policy indicates an increase in the quantity of enabled switch fabric units in the network device; and the determining, based on the current traffic load rate, the resource adjustment policy corresponding to the current network traffic includes: obtaining a first historical traffic load rate of the target network entity; and if the current traffic load rate is lower than the first historical traffic load rate, determining that the resource adjustment policy is the first adjustment policy; or if the current traffic load rate is higher than the first historical traffic load rate, determining that the resource adjustment policy is the second adjustment policy.

Optionally, the adjusting the traffic forwarding resources in the network device based on the resource adjustment policy includes: if the resource adjustment policy is the first adjustment policy, determining, from a plurality of board load rate ranges, a first board load rate range corresponding to the current traffic load rate, where each of the plurality of board load rate ranges corresponds to a fabric unit quantity; and disabling at least one switch fabric unit in an enabled state in the network device based on a first fabric unit quantity corresponding to the first board load rate range, so that a quantity of switch fabric units not disabled in the network device is equal to the first fabric unit quantity.

Optionally, the adjusting the traffic forwarding resources in the network device based on the resource adjustment policy includes: if the resource adjustment policy is the second adjustment policy, determining, from a plurality of board load rate ranges, a second board load rate range corresponding to the current traffic load rate, where each of the plurality of board load rate ranges corresponds to a fabric unit quantity; and enabling at least one switch fabric unit in a disabled state in the network device based on a second fabric unit quantity corresponding to the second board load rate range, so that a quantity of switch fabric units in an enabled state in the network device is equal to the second fabric unit quantity.

Optionally, the plurality of board load rate ranges are obtained by dividing an overall network traffic processing capability of the plurality of interface boards, or the plurality of board load rate ranges are obtained by dividing an overall network traffic processing capability of the plurality of switch fabric units, where a division granularity of the plurality of board load rate ranges is greater than a reference granularity.

It can be learned that, when the target network entity includes the plurality of interface boards or the plurality of switch fabric units, the resource manager may dynamically adjust the quantity of enabled switch fabric units in the network device based on a trend of variation of the current traffic load rate of the target network entity, and when the current network traffic forwarding requirement is met, overall power consumption of the network device is reduced from a perspective of switch fabric units.

Optionally, the interface board includes at least one interface chip, the switch fabric unit includes at least one switch fabric chip, and the switch fabric chip is configured to forward network traffic of one interface chip to another interface chip; the target network entity includes the plurality of interface boards or the plurality of switch fabric units, the resource adjustment policy includes a third adjustment policy and a fourth adjustment policy, the third adjustment policy indicates a decrease in a quantity of enabled switch fabric chips in the network device, and the fourth adjustment policy indicates an increase in the quantity of enabled switch fabric chips in the network device; and the determining, based on the current traffic load rate, the resource adjustment policy corresponding to the current network traffic includes: obtaining a first historical traffic load rate of the target network entity; and if the current traffic load rate is lower than the first historical traffic load rate, determining that the resource adjustment policy is the third adjustment policy; or if the current traffic load rate is higher than the first historical traffic load rate, determining that the resource adjustment policy is the fourth adjustment policy.

Optionally, the adjusting the traffic forwarding resources in the network device based on the resource adjustment policy includes: if the resource adjustment policy is the third adjustment policy, determining, from a plurality of chip load rate ranges, a first chip load rate range corresponding to the current traffic load rate, where each of the plurality of chip load rate ranges corresponds to a chip quantity; and disabling at least one switch fabric chip in an enabled state in the network device based on a first chip quantity corresponding to the first chip load rate range, so that a quantity of switch fabric chips in the enabled state in the network device is equal to the first chip quantity.

Optionally, the adjusting the traffic forwarding resources in the network device based on the resource adjustment policy includes: if the resource adjustment policy is the fourth adjustment policy, determining, from a plurality of chip load rate ranges, a second chip load rate range corresponding to the current traffic load rate, where each of the plurality of chip load rate ranges corresponds to a chip quantity; and enabling at least one switch fabric chip in a disabled state in the network device based on a second chip quantity corresponding to the second chip load rate range, so that a quantity of switch fabric chips in an enabled state in the network device is equal to the second chip quantity.

Optionally, the plurality of chip load rate ranges are obtained by dividing network traffic processing capabilities of interface chips included in the plurality of interface boards, or the plurality of chip load rate ranges are obtained by dividing network traffic processing capabilities of switch fabric chips included in the plurality of switch fabric units, where a division granularity of the chip load rate ranges is less than a reference granularity.

It can be learned that, when the target network entity includes the plurality of interface boards or the plurality of switch fabric units, the resource manager dynamically adjusts the quantity of enabled switch fabric chips in the network device based on the trend of variation of the current traffic load rate of the target network entity, and when the current network traffic forwarding requirement is met, overall power consumption of the network device is reduced from a perspective of switch fabric chips.

It should be noted that adjusting the quantity of enabled switch fabric units is associated with adjusting the quantity of enabled switch fabric chips, that is, the quantity of enabled switch fabric units in the network device may be dynamically adjusted by dynamically adjusting the quantity of enabled switch fabric chips. To enable a switch fabric unit is to enable at least one switch fabric chip on the switch fabric unit; and to disable a switch fabric unit is to disable all switch fabric chips on the switch fabric unit. Compared with the resource adjustment performed from the perspective of switch fabric units, an adjustment granularity of the resource adjustment performed from the perspective of switch fabric chips is finer.

Optionally, the method further includes: obtaining service level agreement (service level agreement, SLA) information corresponding to the current network traffic; and if the SLA information meets an SLA requirement corresponding to the current network traffic, performing the step of adjusting the traffic forwarding resources in the network device based on the resource adjustment policy.

In other words, whether to adjust the quantity of enabled switch fabric units or switch fabric chips in the network device further needs to depend on determining whether the current network traffic meets the SLA requirement, and when the SLA information of the current network traffic meets the corresponding SLA requirement, the quantity of enabled switch fabric units or switch fabric chips in the network device is adjusted based on the determined resource adjustment policy. In this way, normal forwarding of service traffic can be ensured while the traffic forwarding resources of the network device are adjusted.

Optionally, the method further includes: if the SLA information does not meet the SLA requirement corresponding to the current network traffic, enabling at least one switch fabric unit or switch fabric chip in the disabled state in the network device based on a quantity of target units to be enabled.

In other words, when the SLA information of the current network traffic does not meet the corresponding SLA requirement, the quantity of enabled switch fabric units or switch fabric chips in the network device is dynamically adjusted based on the quantity of target units to be enabled, so that the network device can meet the SLA requirement during forwarding of the current network traffic.

Optionally, the target network entity includes a target interface board, the target interface board is any one of the plurality of interface boards, the resource adjustment policy includes a fifth adjustment policy and a sixth adjustment policy, the fifth adjustment policy indicates a decrease in a quantity of enabled serial links of the target interface board, and the sixth adjustment policy indicates an increase in the quantity of enabled serial links of the target interface board; and the determining, based on the current traffic load rate, the resource adjustment policy corresponding to the current network traffic includes: obtaining a second historical traffic load rate of the target network entity; and if the current traffic load rate is lower than the second historical traffic load rate, determining that the resource adjustment policy is the fifth adjustment policy; or if the current traffic load rate is higher than the second historical traffic load rate, determining that the resource adjustment policy is the sixth adjustment policy.

Optionally, the adjusting the traffic forwarding resources in the network device based on the resource adjustment policy includes: if the resource adjustment policy is the fifth adjustment policy, determining, from a plurality of link load rate ranges, a first link load rate range corresponding to the current traffic load rate, where each of the plurality of link load rate ranges corresponds to a link quantity; and disabling at least one serial link in an enabled state on the target interface board based on a first link quantity corresponding to the first link load rate range, so that a quantity of serial links in the enabled state on the target interface board is equal to the first link quantity.

Optionally, the adjusting the traffic forwarding resources in the network device based on the resource adjustment policy includes: if the resource adjustment policy is the sixth adjustment policy, determining, from a plurality of link load rate ranges, a second link load rate range corresponding to the current traffic load rate, where each of the plurality of link load rate ranges corresponds to a link quantity; and enabling at least one serial link in a disabled state on the target interface board based on a second link quantity corresponding to the second link load rate range, so that a quantity of serial links in an enabled state on the target interface board is equal to the second link quantity.

Optionally, the plurality of link load rate ranges are obtained by dividing a network traffic processing capability of the target interface board.

It can be learned that, when the target network entity includes the target interface board, the resource manager dynamically adjusts the quantity of enabled serial links of the target interface board based on a trend of variation of the current traffic load rate of the target interface board, so that the serial links in the enabled state can meet the resource requirement when the target interface board forwards the current network traffic, and overall power consumption of the network device is reduced from a perspective of the interface board.

According to a second aspect, a resource adjustment apparatus is provided. The resource adjustment apparatus has a function of implementing behavior of the resource adjustment method in the first aspect. The resource adjustment apparatus includes at least one module. The at least one module is configured to implement the resource adjustment method provided in the first aspect.

According to a third aspect, a network device is provided. The network device includes a resource manager, a main control board, a plurality of interface boards, and a plurality of switch fabric units, each interface board is connected to at least one switch fabric unit via at least one serial link, and the switch fabric unit is configured to forward network traffic of one interface board to another interface board, where
the resource manager is disposed on the main control board or at least one of the plurality of interface boards, and is configured to perform the resource adjustment method according to the first aspect.

According to a fourth aspect, a computer-readable storage medium is provided. The storage medium stores a computer program. When the computer program is run on a network device, the network device is caused to perform the resource adjustment method according to the first aspect.

According to a fifth aspect, a computer program product including instructions is provided. When the instructions are run on a network device, the network device is caused to perform the resource adjustment method according to the first aspect.

Technical effects achieved in the second aspect, the third aspect, the fourth aspect, and the fifth aspect are similar to technical effects achieved by corresponding technical means in the first aspect. Details are not described herein again.

### BRIEF DESCRIPTION OF DRAWINGS

FIG. 1 is a diagram of a structure of a network device according to an embodiment of this application;
FIG. 2 is a diagram of a structure of another network device according to an embodiment of this application;
FIG. 3 is a schematic flowchart of a resource adjustment method according to an embodiment of this application;
FIG. 4 is a diagram of network traffic fluctuation at different time scales according to an embodiment of this application; and
FIG. 5 is a diagram of a structure of a resource adjustment apparatus according to an embodiment of this application.

### DESCRIPTION OF EMBODIMENTS

To make objectives, technical solutions, and advantages of this application clearer, the following further describes implementations of this application in detail with reference to the accompanying drawings.

Before a resource adjustment method provided in embodiments of this application is described, an application scenario and an implementation environment of embodiments of this application are first described.

A network device is configured to forward network traffic in a network. The network device may be a device such as a switch or a router. Theoretically, when network traffic flowing through the network device is heavier, overall load of the network device is higher, and power consumption is also higher. When network traffic flowing through the network device is lighter, overall load of the network device is lower, and power consumption is also lower. However, in actual application, because a main control board, a plurality of interface boards and switch fabric units, and the like in the network device are all in a running state, a power consumption fluctuation rate of the network device is even less than 10% in cases of relatively heavy network traffic and relatively light network traffic, that is, in two extreme cases of zero traffic and full traffic, a power variation of the network device is less than 10%. In other words, under extremely low traffic load, because many components of the network device are still in an enabled state, the network device still exhibits substantial heat dissipation and power requirements.

Based on this, an embodiment of this application provides a resource adjustment method. A current traffic load rate of a target network entity in a network device is detected, and traffic forwarding resources in the network device are dynamically adjusted, so that overall power consumption of the network device varies with the network traffic. This avoids running of plenty of traffic forwarding resources under a low traffic load condition, thereby reducing power requirements and heat dissipation requirements of the network device under low traffic load.

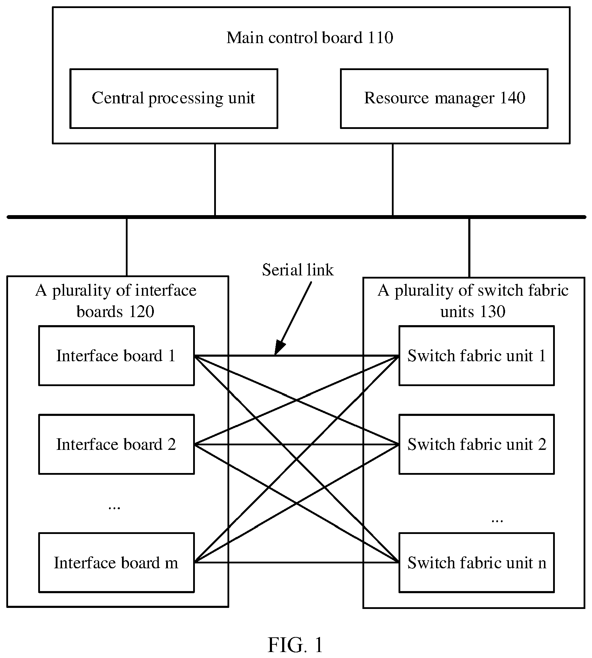

FIG. 1 is a diagram of a structure of a network device according to an embodiment of this application. The network device includes a main control board 110, a plurality of interface boards 120, a plurality of switch fabric units 130, and a resource manager 140. Each interface board (also referred to as a line card or a service board) is connected to at least one switch fabric unit via at least one serial link (Serdes), and the switch fabric unit is configured to forward network traffic of one interface board to another interface board.

The main control board implements functions such as system management, device maintenance, and protocol processing. The plurality of interface boards are configured to provide various service interfaces, for example, a POS (packet over SONET/SDH, a technology for directly transmitting an IP data packet through a high-speed transmission channel provided by a synchronous optical network (synchronous optical networking, SONET) or synchronous digital hierarchy (synchronous digital hierarchy, SDH)) interface, a gigabit Ethernet (gigabit Ethernet, GE) interface, and an asynchronous transfer mode (asynchronous transfer mode, ATM) interface, and implement forwarding of network traffic. The plurality of switch fabric units are configured to forward traffic between interface boards internally. A control plane includes management and control units on the main control board, management and control units on the plurality of interface boards, and the like. The main control board mainly includes three types of functional units: a system management and control unit, a system clock unit, and a system maintenance unit. All of the main control board, the interface boards, and the switch fabric units are connected to a system backplane through a system bus to implement interworking.

In some embodiments, the interface board includes one or more processors, configured to control and manage the interface board, communicate with a central processing unit on the main control board, and forward network traffic. The interface board further includes one or more memories, configured to store a forwarding entry, so that the processor forwards the network traffic by looking up the forwarding entry. The interface board further includes one or more network interfaces, configured to receive a data stream or information sent by another device, and process the data stream or information according to an instruction of the processor.

It should be understood that, as shown in FIG. 1, in this embodiment of this application, the network device includes the plurality of interface boards, and uses a distributed forwarding mechanism. In this mechanism, operations on all interface boards are basically similar. For brevity, details are not described again. In addition, the processor on the interface board may be dedicated hardware or a chip, for example, a network processor or an application-specific integrated circuit (application-specific integrated circuit, ASIC), for implementing the foregoing functions. This implementation is commonly referred to as using dedicated hardware or a chip for processing on a forwarding plane. Certainly, the processor may alternatively use a general-purpose processor, for example, a general-purpose central processing unit (central processing unit, CPU), to implement the foregoing functions. This is not limited in this embodiment of this application.

In some embodiments, the resource manager may be disposed on the main control board, or may be disposed on any interface board, or may be disposed separately. This is not limited in this embodiment of this application. FIG. 1 is merely an example in which the resource manager is disposed on the main control board, and a disposition position of the resource manager is not limited thereto.

Based on this structure, when a resource adjustment method provided in an embodiment of this application is performed, the resource manager obtains a current traffic load rate of a target network entity, determines, based on the current traffic load rate, a resource adjustment policy corresponding to current network traffic, and then adjusts traffic forwarding resources in the network device based on the resource adjustment policy. The target network entity is the plurality of interface boards, the plurality of switch fabric units, or any one of the plurality of interface boards in the network device. The traffic forwarding resources include serial links of the switch fabric units and the interface boards in the network device.

To be specific, by analyzing an overall current traffic load rate of the plurality of interface boards, an overall current traffic load rate of the plurality of switch fabric units, or a current traffic load rate of any interface board, the resource manager determines the resource adjustment policy for processing the current network traffic, and then dynamically adjusts a quantity of enabled switch fabric units in the network device based on the resource adjustment policy, or dynamically adjusts a quantity of enabled serial links of at least one interface board in the network device.

It should be noted that FIG. 1 is merely an example in which the network device 100 includes one main control board, m interface boards, and n switch fabric units. In actual application, the network device 100 may alternatively include a plurality of main control boards. For example, the network device may include an active main control board and a standby main control board. Certainly, the network device 100 may alternatively include more or fewer interface boards. A stronger data processing capability of the network device indicates that more interface boards are provided. When a plurality of interface boards are included, the plurality of interface boards communicate with each other via at least one switch fabric unit, to jointly implement load sharing and redundancy backup. In a centralized forwarding architecture, the network device may alternatively not require any switch fabric unit, and a plurality of interface boards undertake data processing functions of an entire system. In a distributed forwarding architecture, the network device includes a plurality of interface boards, and implements data switching between the plurality of interface boards via switch fabric units, thereby providing large-capacity data switching and processing capabilities. Therefore, data access and processing capabilities of the network device in the distributed architecture are higher than data access and processing capabilities of the network device in the centralized architecture. A specific architecture to be used depends on a specific networking deployment scenario. This is not limited herein.

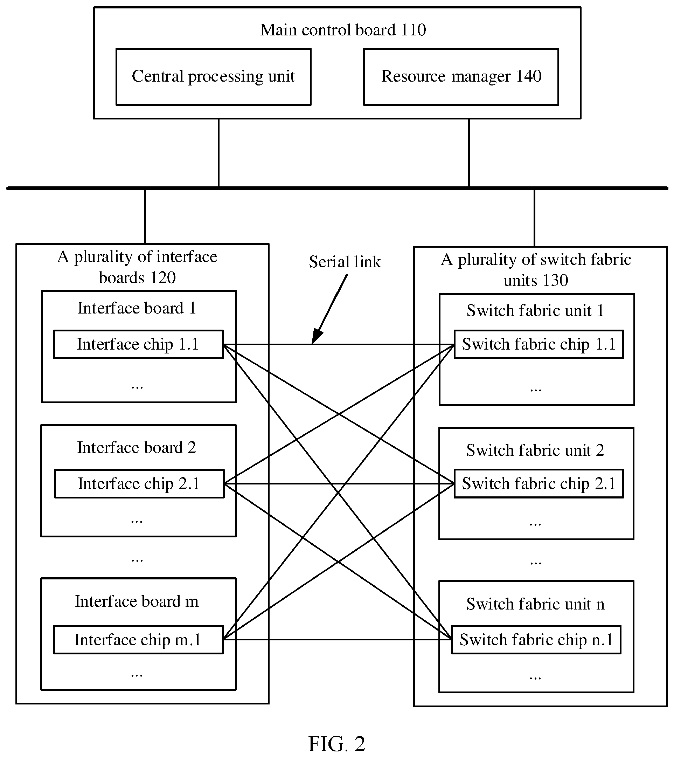

Based on the network device shown in FIG. 1 and with reference to FIG. 2, when implementing data receiving, forwarding, and processing, each interface board includes at least one interface chip, each switch fabric unit includes at least one switch fabric chip, and the switch fabric chip is configured to forward network traffic of one interface chip to another interface chip.

One interface chip is connected to one switch fabric chip via one serial link, to implement transmission of network traffic. Therefore, a quantity of interface chips and a quantity of serial links connected to an interface board determine a network traffic processing capability of the interface board. Similarly, a quantity of switch fabric chips and a quantity of serial links connected to a switch fabric unit determine a network traffic forwarding capability of the switch fabric unit.

Based on this structure, when the resource adjustment method provided in this embodiment of this application is performed, the resource manager determines, by analyzing the overall current traffic load rate of the plurality of interface boards, the overall current traffic load rate of the plurality of switch fabric units, or the current traffic load rate of any interface board, the resource adjustment policy when processing the current network traffic, and then dynamically adjusts, based on the resource adjustment policy, the quantity of enabled switch fabric chips in the network device. In this way, a finer granularity is allowed for adjusting traffic forwarding resources.

It should be understood that the structure of the network device in the foregoing example is intended to describe the technical solutions in embodiments of this application more clearly, and does not constitute a limitation on the network device and the technical solutions provided in embodiments of this application. A person of ordinary skill in the art may know that, as a new network device emerges, the technical solutions provided in embodiments of this application are also applicable to a similar technical problem.

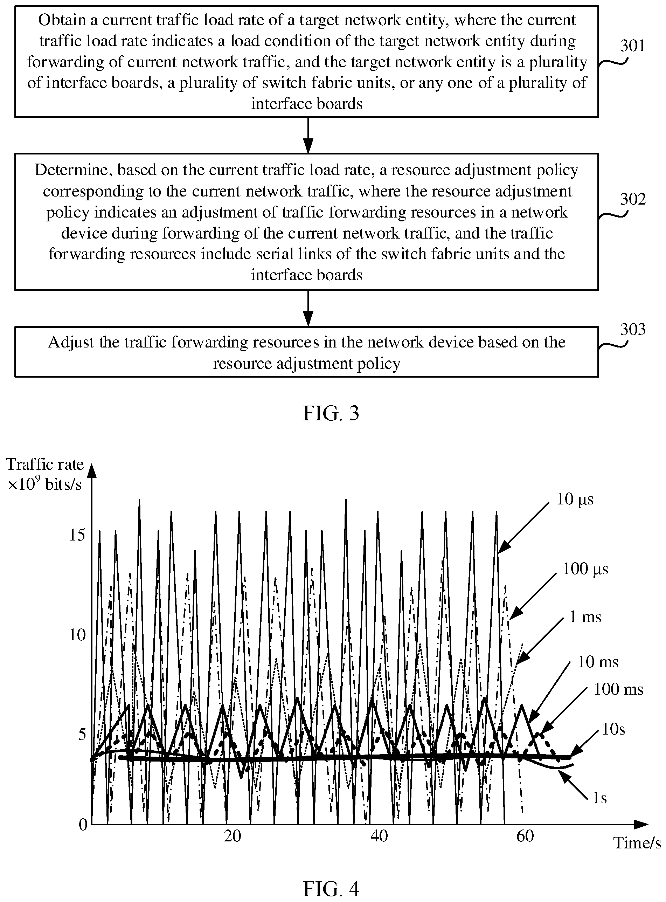

FIG. 3 is a flowchart of a resource adjustment method according to an embodiment of this application. The method is applied to the resource manager 140 shown in FIG. 1 or FIG. 2. The method includes the following steps.

**Step 301:** Obtain a current traffic load rate of a target network entity, where the current traffic load rate indicates a load condition of the target network entity during forwarding of current network traffic, and the target network entity is a plurality of interface boards, a plurality of switch fabric units, or any one of a plurality of interface boards.

In other words, the current traffic load rate is a load rate of the target network entity when the target network entity forwards the current network traffic. The load rate is a ratio of a quantity of network resources occupied when the target network entity processes the current network traffic to a total quantity of network resources of the target network entity, and the load rate may reflect a network traffic bearing capability of the target network entity.

With reference to FIG. 4, for network traffic forwarded by a network device, when the network traffic is observed at a microscopic granularity, for example, at a microsecond (µs) level, the network traffic fluctuates sharply and rapidly. However, when the network traffic is observed at a macroscopic granularity, for example, at a second level or even 10-second level, the network traffic varies stably. In addition, when the network device processes the network traffic, an overall load rate of the network device is also relatively low, and in most cases, a relatively low link load rate level is maintained. Therefore, the current traffic load rate of the target network traffic may be obtained based on a second-level or 10-second-level statistical granularity, and traffic forwarding resources of the network device are adjusted accordingly.

In some embodiments, although a second-level feature of network traffic is relatively stable, when an abnormal network traffic jitter occurs, the network device needs to quickly start corresponding traffic forwarding resources. Therefore, if the second-level feature of the network traffic is directly used as a basis for adjusting the traffic forwarding resources, duration of a wakeup procedure of the network device may not meet an actual network traffic processing requirement due to a delay in collecting traffic load rate statistics of the network traffic. Therefore, to ensure that the network device can effectively process the network traffic in a timely manner when adjusting the traffic forwarding resources, the traffic load rate of the target network entity may be obtained based on a millisecond-level statistical granularity, and used as a basis for dynamically adjusting the traffic forwarding resources, to achieve an effect of dynamically adjusting power consumption of the network device.

Based on this, an implementation process of step 301 may be: obtaining, based on a millisecond-level traffic detection result, an overall current traffic load rate of the plurality of interface boards, an overall current traffic load rate of the plurality of switch fabric units, or a current traffic load rate of any interface board in the network device.

It should be noted that the traffic load rate is continuously measured at the millisecond-level statistical granularity, and a resource adjustment period for dynamically adjusting the traffic forwarding resources may also be at a millisecond level. During a resource adjustment, timely detection may be followed by a timely adjustment, or continuous detection may be followed by a periodic adjustment. This is not limited in this embodiment of this application. For example, the traffic load rate of the target network entity is obtained based on a statistical granularity of 1 millisecond, a statistical result of the traffic load rate is stored, and then the resource adjustment method provided in this embodiment of this application is performed based on a resource adjustment period such as 10 milliseconds or 100 milliseconds.

**Step 302:** Determine, based on the current traffic load rate, a resource adjustment policy corresponding to the current network traffic, where the resource adjustment policy indicates an adjustment of traffic forwarding resources in the network device during forwarding of the current network traffic, and the traffic forwarding resources include serial links of the switch fabric units and the interface boards.

It should be understood that network traffic generally flows in or out of the network device from the plurality of interface boards, and that the traffic is forwarded internally via the plurality of switch fabric units in the network device. Therefore, the overall current traffic load rate of the plurality of interface boards may reflect a load condition when the plurality of switch fabric units forward the network traffic, that is, the overall current traffic load rate of the plurality of interface boards is positively correlated with a quantity of enabled switch fabric units in the network device. The quantity of enabled switch fabric units in the network device may be dynamically adjusted based on the current traffic load rates of the plurality of interface boards. Similarly, network traffic forwarding capabilities of the switch fabric units in the network device are positively correlated with the quantity of enabled switch fabric units in the network device. Therefore, a load condition during forwarding of the current network traffic by the network device may also be determined based on the current traffic load rates of the plurality of switch fabric units, so that the quantity of enabled switch fabric units in the network device is dynamically adjusted. However, for a single interface board, a network traffic processing capability of the interface board is positively correlated with a quantity of enabled serial links of the interface board. Therefore, based on a current traffic load rate of the single interface board, a load condition during processing of the current network traffic by the interface board may be determined, so that the quantity of enabled serial links of the interface board is dynamically adjusted.

Because the target network entity is the plurality of interface boards, the plurality of switch fabric units, or any one of the plurality of interface boards, when the target network entity is different, implementations of determining, based on the current traffic load rate of the target network entity, the resource adjustment policy corresponding to the current network traffic are also different. The following describes the implementations separately.

**In a first implementation,** the target network entity includes the plurality of interface boards or the plurality of switch fabric units. In this case, the resource adjustment policy includes a first adjustment policy and a second adjustment policy, the first adjustment policy indicates a decrease in the quantity of enabled switch fabric units in the network device, and the second adjustment policy indicates an increase in the quantity of enabled switch fabric units in the network device. Based on this, an implementation process of step 302 may be: obtaining a first historical traffic load rate of the target network entity; and if the current traffic load rate is lower than the first historical traffic load rate, determining that the resource adjustment policy is the first adjustment policy; or if the current traffic load rate is higher than the first historical traffic load rate, determining that the resource adjustment policy is the second adjustment policy.

The first historical traffic load rate may be a traffic load rate of the target network entity that is obtained in previous collection of statistics, or may be an average value of traffic load rates of the target network entity in a previous resource adjustment period. This is not limited in embodiments of this application.

For the target network entity, if the current traffic load rate is lower than the first historical traffic load rate, it indicates that after a previous resource adjustment, when switch fabric units in an enabled state in the network device meet a forwarding resource requirement for the current network traffic, the resources may be excessive. Therefore, to improve resource utilization of the network device and reduce overall power consumption of the network device, the quantity of enabled switch fabric units in the network device may be decreased. Similarly, if the current traffic load rate is higher than the first historical traffic load rate, it indicates that after the previous resource adjustment, the switch fabric units in the enabled state in the network device possibly cannot meet the forwarding resource requirement for the current network traffic. Therefore, the quantity of enabled switch fabric units in the network device needs to be increased, so that the switch fabric units in the enabled state in the network device can normally forward the current network traffic.

In other words, the first historical traffic load rate is used as a reference to determine a trend of variation of the current traffic load rate of the target network entity, so as to determine whether the quantity of enabled switch fabric units in the network device needs to be increased.

It should be noted that, if the current traffic load rate of the target network entity is equal to the first historical traffic load rate, it indicates that the switch fabric units in the enabled state in the network device can meet the forwarding resource requirement for the current network traffic. In this case, the quantity of enabled switch fabric units in the network device may not be adjusted.

In some embodiments, to ensure normal forwarding of the network traffic and avoid a case in which great network traffic fluctuation in a current resource adjustment period causes the switch fabric units in the enabled state to fail to meet an actual forwarding resource requirement for the network traffic, it may alternatively be determined that the resource adjustment policy is the second adjustment policy when the current traffic load rate is equal to the first historical traffic load rate.

In this implementation, the resource manager dynamically adjusts the quantity of enabled switch fabric units in the network device based on the trend of variation of the current traffic load rate of the target network entity, and when a current network traffic forwarding requirement is met, overall power consumption of the network device is reduced from a perspective of switch fabric units.

**In a second implementation,** the target network entity includes the plurality of interface boards or the plurality of switch fabric units, the interface board includes at least one interface chip, the switch fabric unit includes at least one switch fabric chip, and the switch fabric chip is configured to forward network traffic of one interface chip to another interface chip. In this case, the resource adjustment policy includes a third adjustment policy and a fourth adjustment policy, the third adjustment policy indicates a decrease in a quantity of enabled switch fabric chips in the network device, and the fourth adjustment policy indicates an increase in the quantity of enabled switch fabric chips in the network device. Based on this, an implementation process of step 302 may be: obtaining a first historical traffic load rate of the target network entity; and if the current traffic load rate is lower than the first historical traffic load rate, determining that the resource adjustment policy is the third adjustment policy; or if the current traffic load rate is higher than the first historical traffic load rate, determining that the resource adjustment policy is the fourth adjustment policy.

The first historical traffic load rate may be a traffic load rate of the target network entity that is obtained in previous collection of statistics, or may be an average value of traffic load rates of the target network entity in a previous resource adjustment period. This is not limited in embodiments of this application.

For the target network entity, if the current traffic load rate is lower than the first historical traffic load rate, it indicates that after a previous resource adjustment, when switch fabric chips in an enabled state in the network device meet a forwarding resource requirement for the current network traffic, the resources may be excessive. Therefore, to improve resource utilization of the network device and reduce overall power consumption of the network device, the quantity of enabled switch fabric chips in the network device may be decreased. Similarly, if the current traffic load rate is higher than the first historical traffic load rate, it indicates that after the previous resource adjustment, the switch fabric chips in the enabled state in the network device possibly cannot meet the forwarding resource requirement for the current network traffic. Therefore, the quantity of enabled switch fabric chips in the network device needs to be increased, so that the switch fabric chips in the enabled state in the network device can normally forward the current network traffic.

In other words, the first historical traffic load rate is used as a reference to determine a trend of variation of the current traffic load rate of the target network entity, so as to determine whether the quantity of enabled switch fabric chips in the network device needs to be increased.

It should be noted that, if the current traffic load rate of the target network entity is equal to the first historical traffic load rate, it indicates that the switch fabric chips in the enabled state in the network device can meet the forwarding resource requirement for the current network traffic. In this case, the quantity of enabled switch fabric chips in the network device may not be adjusted.

In some embodiments, to ensure normal forwarding of the network traffic and avoid a case in which great network traffic fluctuation in a current resource adjustment period causes the switch fabric chips in the enabled state to fail to meet an actual forwarding resource requirement for the network traffic, it may alternatively be determined that the resource adjustment policy is the fourth adjustment policy when the current traffic load rate is equal to the first historical traffic load rate.

It should be noted that adjusting the quantity of enabled switch fabric units is associated with adjusting the quantity of enabled switch fabric chips, that is, the quantity of enabled switch fabric units in the network device may be dynamically adjusted by dynamically adjusting the quantity of enabled switch fabric chips. To enable a switch fabric unit is to enable at least one switch fabric chip on the switch fabric unit; and to disable a switch fabric unit is to disable all switch fabric chips on the switch fabric unit. In other words, in the first implementation, the resource adjustment is performed from the perspective of switch fabric units, but in the second implementation, the resource adjustment is performed from a perspective of switch fabric chips. Compared with the first implementation, in the second implementation, an adjustment granularity of the traffic forwarding resources is finer.

In this implementation, the resource manager dynamically adjusts the quantity of enabled switch fabric chips in the network device based on the trend of variation of the current traffic load rate of the target network entity, and when a current network traffic forwarding requirement is met, overall power consumption of the network device is reduced from the perspective of switch fabric chips.

**In a third implementation,** the target network entity includes a target interface board, and the target interface board is any one of the plurality of interface boards. In this case, the resource adjustment policy includes a fifth adjustment policy and a sixth adjustment policy, the fifth adjustment policy indicates a decrease in a quantity of enabled serial links of the target interface board, and the sixth adjustment policy indicates an increase in the quantity of enabled serial links of the target interface board. Based on this, an implementation process of step 302 may be: obtaining a second historical traffic load rate of the target network entity; and if the current traffic load rate is lower than the second historical traffic load rate, determining that the resource adjustment policy is the fifth adjustment policy; or if the current traffic load rate is higher than the second historical traffic load rate, determining that the resource adjustment policy is the sixth adjustment policy.

The second historical traffic load rate may be a traffic load rate of the target interface board obtained in previous collection of statistics, or may be an average value of traffic load rates of the target interface board in a previous resource adjustment period. This is not limited in this embodiment of this application.

For the target interface board, if the current traffic load rate is lower than the second historical traffic load rate, it indicates that after a previous resource adjustment, when serial links in an enabled state on the target interface board meet a forwarding resource requirement for the current network traffic, the resources may be excessive. Therefore, to improve resource utilization of the target interface board and reduce overall power consumption of the target interface board, the quantity of enabled serial links on the target interface board may be decreased. Similarly, if the current traffic load rate is higher than the second historical traffic load rate, it indicates that after the previous resource adjustment, the serial links in the enabled state on the target interface board possibly cannot meet the forwarding resource requirement for the current network traffic. Therefore, the quantity of enabled serial links on the target interface board needs to be increased, so that the serial links in the enabled state on the target interface board can normally forward the current network traffic.

In other words, the second historical traffic load rate is used as a reference to determine a trend of variation of a current traffic load rate of the target interface board, so as to determine whether the quantity of enabled serial links on the target interface board needs to be increased.

It should be noted that, if the current traffic load rate of the target interface board is equal to the second historical traffic load rate, it indicates that the serial links in the enabled state on the target interface board can meet the forwarding resource requirement for the current network traffic. In this case, the quantity of enabled serial links on the target interface board may not be adjusted.

In some embodiments, to ensure that the target interface board can normally process the network traffic and avoid a case in which great network traffic fluctuation in a current resource adjustment period causes the serial links in the enabled state to fail to meet an actual forwarding resource requirement for the network traffic, it may alternatively be determined that the resource adjustment policy is the sixth adjustment policy when the current traffic load rate is equal to the second historical traffic load rate.

In this implementation, the resource manager dynamically adjusts the quantity of enabled serial links of the target interface board based on the trend of variation of the current traffic load rate of the target interface board, so that the serial links in the enabled state can meet the resource requirement when the target interface board forwards the current network traffic, and overall power consumption of the network device is reduced from a perspective of the interface board.

In some embodiments, a quantity of enabled serial links of each interface board in the network device may also be dynamically adjusted according to the foregoing third implementation, to reduce overall power consumption of the network device from a perspective of the interface board.

**Step 303:** Adjust the traffic forwarding resources in the network device based on the resource adjustment policy.

Refer to the description of step 302. When the target network entity is different, the determined resource adjustment policy is different. Therefore, implementations of adjusting the traffic forwarding resources based on different resource adjustment policies are also different. The following describes the implementations separately.

Corresponding to the first implementation shown in the foregoing step 302, the resource manager may dynamically adjust the quantity of enabled switch fabric units in the network device based on the current traffic load rates of the plurality of interface boards or the plurality of switch fabric units. In this case, an implementation of step 303 includes the following first case and second case.

**In the first case,** if the resource adjustment policy is the first adjustment policy, a first board load rate range corresponding to the current traffic load rate is determined from a plurality of board load rate ranges, where each of the plurality of board load rate ranges corresponds to a fabric unit quantity; and at least one switch fabric unit in the enabled state in the network device is disabled based on a first fabric unit quantity corresponding to the first board load rate range, so that a quantity of switch fabric units not disabled in the network device is equal to the first fabric unit quantity.

It should be noted that, to distinguish from disabling processing of a switch fabric chip, a switch fabric unit not disabled herein refers to a switch fabric unit on which at least one switch fabric chip is in the enabled state. For the switch fabric unit in the network device, if at least one switch fabric chip thereof is in the enabled state, it is considered that the switch fabric unit is in the enabled state. Therefore, when the quantity of switch fabric units not disabled in the network device is equal to the first fabric unit quantity, all switch fabric chips on the switch fabric units that are not disabled may be in the enabled state, or some of the switch fabric chips may be in the enabled state. This is not limited in this embodiment of this application.

In a possible implementation, during disabling processing of the switch fabric units, the switch fabric units may be disabled in a manner of power-off, clock gating (Clock Gating), frequency reduction, or the like. A specific disabling manner is not limited in this embodiment of this application.

Optionally, when a service quick wakeup requirement is met, during disabling of a switch fabric unit, a serial link, a media access control address (media access control address, MAC) interface module (also referred to as a MAC interface module), a switch buffer (switch buffer, SWB) module, or the like of a switch fabric chip on the switch fabric unit may also be selectively disabled. This is not limited in this embodiment of this application.

**In the second case,** if the resource adjustment policy is the second adjustment policy, a second board load rate range corresponding to the current traffic load rate is determined from a plurality of board load rate ranges, where each of the plurality of board load rate ranges corresponds to a fabric unit quantity; and at least one switch fabric unit in a disabled state in the network device is enabled based on a second fabric unit quantity corresponding to the second board load rate range, so that a quantity of switch fabric units in the enabled state in the network device is equal to the second fabric unit quantity.

Similarly, to distinguish from enabling processing of a switch fabric chip, if at least one switch fabric chip is in the enabled state, it is considered that the switch fabric unit is in the enabled state. A quantity of enabled switch fabric chips on the switch fabric unit in the enabled state is not limited in this embodiment of this application.

In a possible implementation, during enabling processing of the switch fabric units, the switch fabric units may be enabled in a manner of power-on, clock gating cancellation, frequency reduction cancellation, or the like. A specific enabling manner is not limited in this embodiment of this application.

Optionally, during enabling of a switch fabric unit, a serial link, a MAC interface module, an SWB module, or the like of a switch fabric chip on the switch fabric unit may be enabled. Specifically, which functional modules are correspondingly enabled during the enabling processing depends on which functional modules are disabled during the disabling processing.

It should be noted that the plurality of board load rate ranges are obtained by dividing an overall network traffic processing capability of the plurality of interface boards, or that the plurality of board load rate ranges are obtained by dividing an overall network traffic processing capability of the plurality of switch fabric units, where a division granularity of the plurality of board load rate ranges is greater than a reference granularity.

When the target network entity is the plurality of interface boards, the plurality of board load rate ranges and the fabric unit quantity corresponding to each board load rate range are determined based on the overall network traffic processing capability of the plurality of interface boards. When the target network entity is the plurality of switch fabric units, the plurality of board load rate ranges and the fabric unit quantity corresponding to each board load rate range are determined based on the overall network traffic processing capability of the plurality of switch fabric units.

Based on the foregoing two cases, when the target network entity includes the plurality of interface boards or the plurality of switch fabric units, a board load rate range within which the current traffic load rate falls is first determined from the plurality of board load rate ranges based on the current traffic load rate of the target network entity, and then a fabric unit quantity corresponding to the board load rate range is used as a target adjustment value, to adjust the quantity of enabled switch fabric units in the network device.

In an example, an implementation process of determining the plurality of board load rate ranges and the fabric unit quantity corresponding to each board load rate range may be: obtaining a plurality of traffic load rate ranges by dividing the overall network traffic processing capability of the plurality of interface boards or the overall network traffic processing capability of the plurality of switch fabric units, to determine the plurality of board load rate ranges; and configuring a percentage of enabled/disabled fabric units for each board load rate range, to determine the fabric unit quantity corresponding to each board load rate range. Table 1 shows a correspondence between a board load rate range and a fabric unit quantity.

**Table 1**

| Board load rate range | Fabric unit quantity |
|---|---|
| (0%, 56%) | 60%/40% |
| (56%, 75%) | 80%/20% |
| (75%, 100%) | 100% |

It should be understood that Table 1 merely uses three board load rate ranges as an example, and does not constitute a limitation on the quantity of board load rate ranges obtained through division.

With reference to Table 1, if the current traffic load rate of the target network entity is 68%, because the current traffic load rate falls within a board load rate range (56%, 75%), the quantity of enabled switch fabric units in the network device is adjusted based on a percentage 80%/20% of enabled/disabled fabric units, so that a percentage of the quantity of switch fabric units in the enabled state in the network device to a total quantity of switch fabric units is 80%.

Based on the foregoing Table 1, when it is known that the network device includes five interface boards and five switch fabric units, and an overall traffic processing rate of the five interface boards is 12.8 Tbps, and a network traffic processing capability of each switch fabric unit is 2.56 Tbps, 12.8 Tbps may be divided into three traffic load ranges. Therefore, three board load rate ranges are determined, where each board load rate range corresponds to one traffic load range; and a quantity of enabled fabric units is configured for each board load rate range. Table 2 shows another correspondence between a board load rate range and a fabric unit quantity.

**Table 2**

| Board load rate range | Fabric unit quantity |
|---|---|
| (0 Tbps, 7.2 Mbps) | 3 |
| (7.2 Mbps, 9.6 Mbps) | 4 |
| (9.6 Mbps, 12.8 Tbps) | 5 |

With reference to Table 2, if the current traffic load rate of the target network entity is 68%, and a total capacity of the target network entity is 12.8 Tbps, it is determined that current traffic load of the target network entity is about 8.7 Mbps. Because the current traffic load is within the board load rate range (7.2 Mbps, 9.6 Mbps), the quantity of enabled switch fabric units in the network device is adjusted to 4.

With reference to the foregoing Table 1 or Table 2, if the current traffic load rate of the target network entity is the same as an endpoint value of a board load rate range, the quantity of enabled switch fabric units in the network device may be dynamically adjusted based on a fabric unit quantity corresponding to the board load rate range, or an operation of adjusting the quantity of enabled switch fabric units in the network device may not be performed. This is not limited in this embodiment of this application.

It should be understood that Table 1 and Table 2 are merely examples of representation forms of the board load rate range and the fabric unit quantity. In actual application, a correspondence between a board load rate range and a fabric unit quantity may alternatively be set in another manner. This is not limited in this embodiment of this application.

Corresponding to the second implementation shown in the foregoing step 302, the resource manager may dynamically adjust the quantity of enabled switch fabric chips in the network device based on the current traffic load rates of the plurality of interface boards or the plurality of switch fabric units. In this case, an implementation of step 303 includes the following third case and fourth case.

**In the third case,** if the resource adjustment policy is the third adjustment policy, a first chip load rate range corresponding to the current traffic load rate is determined from a plurality of chip load rate ranges, where each of the plurality of chip load rate ranges corresponds to a chip quantity; and at least one switch fabric chip in the enabled state in the network device is disabled based on a first chip quantity corresponding to the first chip load rate range, so that a quantity of switch fabric chips in the enabled state in the network device is equal to the first chip quantity.

In a possible implementation, when a service quick wakeup requirement is met, during disabling of a switch fabric chip, a serial link, a MAC interface module, an SWB module, or the like of the switch fabric chip may also be selectively disabled. This is not limited in this embodiment of this application.

**In the fourth case,** if the resource adjustment policy is the fourth adjustment policy, a second chip load rate range corresponding to the current traffic load rate is determined from a plurality of chip load rate ranges, where each of the plurality of chip load rate ranges corresponds to a chip quantity; and at least one switch fabric chip in a disabled state in the network device is enabled based on a second chip quantity corresponding to the second chip load rate range, so that a quantity of switch fabric chips in the enabled state in the network device is equal to the second chip quantity.

In a possible implementation, during enabling processing of a switch fabric chip, a serial link, a MAC interface module, an SWB module, or the like of the switch fabric chip may be enabled. For example, which functional modules are correspondingly enabled during the enabling processing depends on which functional modules are disabled during the disabling processing. This is not limited in this embodiment of this application.

It should be noted that the plurality of chip load rate ranges are obtained by dividing network traffic processing capabilities of interface chips included in the plurality of interface boards, or the plurality of chip load rate ranges are obtained by dividing network traffic processing capabilities of switch fabric chips included in the plurality of switch fabric units, where a division granularity of the chip load rate ranges is less than a reference granularity.

In other words, the division granularity of the chip load rate ranges is less than the foregoing division granularity of the board load rate ranges. Therefore, the traffic forwarding resources in the network device may be dynamically adjusted at a finer granularity.

When the target network entity is the plurality of interface boards, the plurality of chip load rate ranges and the chip quantity corresponding to each chip load rate range are determined based on the network traffic processing capabilities of the interface chips included in the plurality of interface boards. When the target network entity is the plurality of switch fabric units, the plurality of chip load rate ranges and the chip quantity corresponding to each chip load rate range are determined based on the network traffic processing capabilities of the switch fabric chips included in the plurality of switch fabric units.

Based on the foregoing two cases, when the target network entity includes the plurality of interface boards or the plurality of switch fabric units, a chip load rate range within which the current traffic load rate falls is first determined from the plurality of chip load rate ranges based on the current traffic load rate of the target network entity, and then a chip quantity corresponding to the chip load rate range is used as a target adjustment value, to adjust the quantity of enabled switch fabric chip in the network device.

In an example, an implementation process of determining the plurality of chip load rate ranges and the chip quantity corresponding to each chip load rate range may be: obtaining a plurality of traffic load rate ranges by dividing the overall network traffic processing capability of the plurality of interface boards or the overall network traffic processing capability of the plurality of switch fabric units, to determine the plurality of chip load rate ranges; and configuring a percentage of enabled/disabled chips for each chip load rate range, to determine the chip quantity corresponding to each chip load rate range. Table 3 shows a correspondence between a chip load rate range and a chip quantity.

**Table 3**

| Chip load rate range | Chip quantity |
|---|---|
| (0, 20%) | 60%/40% |
| (20%, 40%) | 70%/30% |
| (40%, 60%) | 80%/20% |
| (60%, 80%) | 90%/10% |
| (80%, 100%) | 100% |

It should be understood that Table 3 merely uses five chip load rate ranges as an example, and does not constitute a limitation on a quantity of chip load rate ranges obtained through division.

With reference to Table 3, if the current traffic load rate of the target network entity is 70%, because the current traffic load rate falls within a chip load rate range (60%, 80%), the quantity of enabled switch fabric chips in the network device is adjusted based on a percentage 90%/10% of enabled/disabled chips, so that a percentage of the quantity of switch fabric chips in the enabled state in the network device to a total quantity of switch fabric chips is 90%.

Based on the foregoing Table 3, the network device includes five interface boards and five switch fabric units, an overall traffic processing rate of the five interface boards is 12.8 Tbps, a network traffic processing capability of each switch fabric unit is 2.56 Tbps, and one switch fabric unit includes two switch fabric chips, that is, the network device includes 10 switch fabric chips, and a processing capability of each switch fabric chip is 1.28 Tbps.

In this case, 12.8 Tbps may be divided into five traffic load ranges. Therefore, five chip load rate ranges are determined, where each chip load rate range corresponds to one traffic load range; and a quantity of enabled chips is configured for each chip load rate range. Table 4 shows another correspondence between a chip load rate range and a chip quantity.

**Table 4**

| Chip load rate range | Chip quantity |
|---|---|
| (0 Tbps, 2.56 Mbps) | 6 |
| (2.56 Mbps, 5.12 Mbps) | 7 |
| (5.12 Mbps, 7.68 Mbps) | 8 |
| (7.68 Mbps, 10.2 Mbps) | 9 |
| (10.2 Mbps, 12.8 Mbps) | 10 |

With reference to Table 4, if the current traffic load rate of the target network entity is 70%, and the total capacity of the target network entity is 12.8 Tbps, it may be determined that the current traffic load of the target network entity is about 8.96 Mbps. Because the current traffic load is within a chip load rate range (7.68 Mbps, 10.2 Mbps), the quantity of enabled switch fabric chips in the network device is adjusted to 9.

With reference to the foregoing Table 3 or Table 4, if the current traffic load rate of the target network entity is the same as an endpoint value of a chip load rate range, the quantity of enabled switch fabric chips in the network device may be dynamically adjusted based on a chip quantity corresponding to the chip load rate range, or an operation of adjusting the quantity of enabled switch fabric chips in the network device may not be performed. This is not limited in this embodiment of this application.

It should be understood that Table 3 and Table 4 are merely examples of representation forms of the chip load rate range and the chip quantity. In actual application, a correspondence between a chip load rate range and a chip quantity may alternatively be set in another manner. This is not limited in this embodiment of this application.

In some embodiments, when the quantity of enabled switch fabric chips in the network device is adjusted, at least one switch fabric chip may be selected, based on a chip selection policy, from the switch fabric chips included in the network device, for disabling processing or enabling processing.

The chip selection policy is to select a to-be-disabled switch fabric chip from a switch fabric unit on which some switch fabric chips have been disabled, or similarly, select a to-be-enabled switch fabric chip from a switch fabric unit on which some switch fabric chips have been enabled. In other words, the policy is to disable or enable switch fabric chips on a switch fabric unit in a centralized manner as much as possible.

In a possible implementation, based on enabled/disabled states of switch fabric chips on the plurality of switch fabric units and the first chip quantity, a target chip that needs to be disabled is determined from at least one switch fabric chip in the enabled state in the network device, and then the target chip is disabled. Similarly, based on enabled/disabled states of switch fabric chips on the plurality of switch fabric units and the second chip quantity, a target chip that needs to be enabled is determined from at least one switch fabric chip in the disabled state in the network device, and then the target chip is enabled.

In an example, the network device includes five switch fabric units each including three switch fabric chips, and enabled/disabled states of the switch fabric chips on the five switch fabric units are listed in the following Table 5.

**Table 5**

| Switch fabric unit | Switch fabric chip | Enabled/Disabled state |
|---|---|---|
| Switch fabric unit 1 | Switch fabric chip 1.1 | Enabled state |
| | Switch fabric chip 1.2 | Disabled state |
| | Switch fabric chip 1.3 | Enabled state |
| Switch fabric unit 2 | Switch fabric chip 2.1 | Disabled state |
| | Switch fabric chip 2.2 | Disabled state |
| | Switch fabric chip 2.3 | Disabled state |
| Switch fabric unit 3 | Switch fabric chip 3.1 | Disabled state |
| | Switch fabric chip 3.2 | Enabled state |
| | Switch fabric chip 3.3 | Disabled state |
| Switch fabric unit 4 | Switch fabric chip 4.1 | Enabled state |
| | Switch fabric chip 4.2 | Enabled state |
| | Switch fabric chip 4.3 | Enabled state |
| Switch fabric unit 5 | Switch fabric chip 5.1 | Enabled state |
| | Switch fabric chip 5.2 | Disabled state |
| | Switch fabric chip 5.3 | Disabled state |

It can be learned that all switch fabric chips on the switch fabric unit 2 in the network device are in the disabled state, and that all switch fabric chips on the switch fabric unit 4 are in the enabled state. However, on the switch fabric unit 1, the switch fabric unit 3, and the switch fabric unit 5, both a switch fabric chip in the enabled state and a switch fabric chip in the disabled state exist.

When the first chip quantity is 3, three switch fabric chips need to be selected from the switch fabric chips in the enabled state in the network device for disabling processing. Considering that some switch fabric chips on the switch fabric unit 1, the switch fabric unit 3, and the switch fabric unit 5 are already in the disabled state, three switch fabric chips are selected from the switch fabric chip 1.1, the switch fabric chip 1.3, the switch fabric chip 3.2, and the switch fabric chip 5.1 in the enabled state as target chips, and the three switch fabric chips are disabled.

When the second chip quantity is 5, five switch fabric chips need to be selected from the switch fabric chips in the disabled state in the network device for enabling processing. Similarly, considering that some switch fabric chips on the switch fabric unit 1, the switch fabric unit 3, and the switch fabric unit 5 are already in the enabled state, the switch fabric chip 1.2, the switch fabric chip 3.1, the switch fabric chip 3.3, the switch fabric chip 5.2, and the switch fabric chip 5.3 in the disabled state serve as target chips, and the target chips are enabled.

In addition, before the foregoing step 303 is performed, whether to adjust the quantity of enabled switch fabric units or switch fabric chips in the network device further needs to depend on determining whether the current network traffic meets a service level agreement (service level agreement, SLA) requirement.

In some embodiments, the resource manager obtains SLA information corresponding to the current network traffic; and if the SLA information meets the SLA requirement corresponding to the current network traffic, step 303 is performed.

The SLA information of the current network traffic includes at least one SLA parameter, and the at least one SLA parameter includes one or more of a packet loss rate, a bit error rate, a delay, and the like. Correspondingly, the SLA requirement of the current network traffic includes at least one piece of requirement information, and the at least one piece of requirement information includes one or more of a packet loss rate requirement, a bit error rate requirement, a delay requirement, and the like. Each SLA parameter corresponds to one piece of requirement information.

In a possible implementation, when each SLA parameter of the current network traffic meets the corresponding requirement information, it is determined that the SLA information of the current network traffic meets the SLA requirement of the current network traffic.

In some embodiments, if the SLA information of the current network traffic does not meet the SLA requirement corresponding to the current network traffic, at least one switch fabric unit or switch fabric chip in the disabled state in the network device is enabled based on a quantity of target units to be enabled.

In a possible implementation, for a plurality of SLA parameters of the current network traffic, if one SLA parameter does not meet corresponding requirement information, the SLA information of the current network traffic does not meet the SLA requirement of the current network traffic.

The quantity of target units to be enabled may be set to any value, for example, 1, 2, or 3. For example, if one target unit is to be enabled, that is, when the SLA information of the current network traffic does not meet the SLA requirement corresponding to the current network traffic, one switch fabric unit or one switch fabric chip in the disabled state in the network device is enabled.

Corresponding to the third implementation shown in the foregoing step 302, the resource manager may dynamically adjust the quantity of enabled serial links of the target interface board based on the current traffic load rate of the target interface board. In this case, an implementation of step 303 includes the following fifth case and sixth case.

**In the fifth case,** if the resource adjustment policy is the fifth adjustment policy, a first link load rate range corresponding to the current traffic load rate is determined from a plurality of link load rate ranges, where each of the plurality of link load rate ranges corresponds to a link quantity; and at least one serial link in the enabled state on the target interface board is disabled based on a first link quantity corresponding to the first link load rate range, so that a quantity of serial links in the enabled state on the target interface board is equal to the first link quantity.

It should be noted that, because an interface board relates to a forwarding service, the interface board cannot be directly disabled. Therefore, when the serial link of the target interface board is disabled, the serial link may be disabled in a manner such as clock control or frequency reduction. This is not limited in this embodiment of this application.

In some embodiments, whether to perform an operation of disabling the serial link of the target interface board may be further determined based on a support status of an interface chip on the target interface board. An operation of disabling the serial link of the target interface board may be performed based on the first link quantity while a normal traffic forwarding service and interface chip function are ensured.

Optionally, on the basis of disabling the serial link, a submodule, a subplane, or the like of the target interface board may also be disabled. This is not limited in this embodiment of this application.

**In the sixth case,** if the resource adjustment policy is the sixth adjustment policy, a second link load rate range corresponding to the current traffic load rate is determined from a plurality of link load rate ranges, where each of the plurality of link load rate ranges corresponds to a link quantity; and at least one serial link in the disabled state on the target interface board is enabled based on a second link quantity corresponding to the second link load rate range, so that a quantity of serial links in the enabled state on the target interface board is equal to the second link quantity.

In some embodiments, when the serial link is enabled, a submodule, a subplane, or the like that is disabled inside the target interface board may also be enabled. A specific enabling processing manner may be clock cancellation, frequency reduction cancellation, or the like, and may further include an operation procedure such as entry delivery or module wakeup, until the target interface board works normally.

It should be noted that the plurality of link load rate ranges are obtained by dividing a network traffic processing capability of the target interface board.

In conclusion, in this embodiment of this application, the resource manager determines, based on the current traffic load rate of the target network entity, the resource adjustment policy corresponding to the current network traffic, and then adjusts, based on the resource adjustment policy, the traffic forwarding resources that are in the network device and that are used to forward the current network traffic. In this way, the traffic forwarding resources in the network device are dynamically adjusted based on the current traffic load rate of the target network entity, so that overall power consumption of the network device can vary with the current network traffic. This avoids running of plenty of traffic forwarding resources under a low traffic load condition, thereby reducing power requirements and heat dissipation requirements of the network device under low traffic load while meeting a current network traffic forwarding requirement.

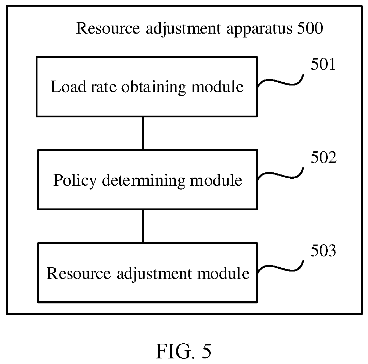

FIG. 5 is a diagram of a structure of a resource adjustment apparatus according to an embodiment of this application. The resource adjustment apparatus may be implemented as a part or all of the resource adjuster 140 shown in FIG. 1 or FIG. 2 by using software, hardware, or a combination thereof. The resource adjustment apparatus 500 includes a load rate obtaining module 501, a policy determining module 502, and a resource adjustment module 503.

The load rate obtaining module 501 is configured to obtain a current traffic load rate of a target network entity, where the current traffic load rate indicates a load condition of the target network entity during forwarding of current network traffic, and the target network entity is a plurality of interface boards, a plurality of switch fabric units, or any one of a plurality of interface boards. For a detailed implementation process, refer to related content in step 301, and details are not described herein again.

The policy determining module 502 is configured to determine, based on the current traffic load rate, a resource adjustment policy corresponding to the current network traffic, where the resource adjustment policy indicates an adjustment of traffic forwarding resources in a network device during forwarding of the current network traffic, and the traffic forwarding resources include serial links of the switch fabric units and the interface boards. For a detailed implementation process, refer to related content in step 302, and details are not described herein again.

The resource adjustment module 503 is configured to adjust the traffic forwarding resources in the network device based on the resource adjustment policy. For a detailed implementation process, refer to related content in step 303, and details are not described herein again.

Optionally, the target network entity includes the plurality of interface boards or the plurality of switch fabric units, the resource adjustment policy includes a first adjustment policy and a second adjustment policy, the first adjustment policy indicates a decrease in a quantity of enabled switch fabric units in the network device, and the second adjustment policy indicates an increase in the quantity of enabled switch fabric units in the network device; and
the policy determining module 502 is specifically configured to:
obtain a first historical traffic load rate of the target network entity; and
if the current traffic load rate is lower than the first historical traffic load rate, determine that the resource adjustment policy is the first adjustment policy; or
if the current traffic load rate is higher than the first historical traffic load rate, determine that the resource adjustment policy is the second adjustment policy.

Optionally, the resource adjustment module 503 is specifically configured to:
if the resource adjustment policy is the first adjustment policy, determine, from a plurality of board load rate ranges, a first board load rate range corresponding to the current traffic load rate, where each of the plurality of board load rate ranges corresponds to a fabric unit quantity; and
disable at least one switch fabric unit in an enabled state in the network device based on a first fabric unit quantity corresponding to the first board load rate range, so that a quantity of switch fabric units not disabled in the network device is equal to the first fabric unit quantity.

Optionally, the resource adjustment module 503 is specifically configured to:
if the resource adjustment policy is the second adjustment policy, determine, from a plurality of board load rate ranges, a second board load rate range corresponding to the current traffic load rate, where each of the plurality of board load rate ranges corresponds to a fabric unit quantity; and
enable at least one switch fabric unit in a disabled state in the network device based on a second fabric unit quantity corresponding to the second board load rate range, so that a quantity of switch fabric units in an enabled state in the network device is equal to the second fabric unit quantity.

Optionally, the plurality of board load rate ranges are obtained by dividing an overall network traffic processing capability of the plurality of interface boards, or the plurality of board load rate ranges are obtained by dividing an overall network traffic processing capability of the plurality of switch fabric units, where a division granularity of the plurality of board load rate ranges is greater than a reference granularity.

Optionally, the interface board includes at least one interface chip, the switch fabric unit includes at least one switch fabric chip, and the switch fabric chip is configured to forward network traffic of one interface chip to another interface chip; the target network entity includes the plurality of interface boards or the plurality of switch fabric units, the resource adjustment policy includes a third adjustment policy and a fourth adjustment policy, the third adjustment policy indicates a decrease in a quantity of enabled switch fabric chips in the network device, and the fourth adjustment policy indicates an increase in the quantity of enabled switch fabric chips in the network device; and
the policy determining module 502 is specifically configured to:
obtain a first historical traffic load rate of the target network entity; and
if the current traffic load rate is lower than the first historical traffic load rate, determine that the resource adjustment policy is the third adjustment policy; or
if the current traffic load rate is higher than the first historical traffic load rate, determine that the resource adjustment policy is the fourth adjustment policy.

Optionally, the resource adjustment module 503 is specifically configured to:
if the resource adjustment policy is the third adjustment policy, determine, from a plurality of chip load rate ranges, a first chip load rate range corresponding to the current traffic load rate, where each of the plurality of chip load rate ranges corresponds to a chip quantity; and
disable at least one switch fabric chip in an enabled state in the network device based on a first chip quantity corresponding to the first chip load rate range, so that a quantity of switch fabric chips in the enabled state in the network device is equal to the first chip quantity.

Optionally, the resource adjustment module 503 is specifically configured to:
if the resource adjustment policy is the fourth adjustment policy, determine, from a plurality of chip load rate ranges, a second chip load rate range corresponding to the current traffic load rate, where each of the plurality of chip load rate ranges corresponds to a chip quantity; and
enable at least one switch fabric chip in a disabled state in the network device based on a second chip quantity corresponding to the second chip load rate range, so that a quantity of switch fabric chips in an enabled state in the network device is equal to the second chip quantity.

Optionally, the plurality of chip load rate ranges are obtained by dividing network traffic processing capabilities of interface chips included in the plurality of interface boards, or the plurality of chip load rate ranges are obtained by dividing network traffic processing capabilities of switch fabric chips included in the plurality of switch fabric units, where a division granularity of the chip load rate ranges is less than a reference granularity.

Optionally, the resource adjustment apparatus 500 further includes:
an information obtaining module, configured to obtain service level agreement SLA information corresponding to the current network traffic; and
if the SLA information meets an SLA requirement corresponding to the current network traffic, the resource adjustment module is further configured to perform the step of adjusting the traffic forwarding resources in the network device based on the resource adjustment policy.

Optionally, if the SLA information does not meet the SLA requirement corresponding to the current network traffic, the resource adjustment module is further configured to enable at least one switch fabric unit or switch fabric chip in the disabled state in the network device based on a quantity of target units to be enabled.

Optionally, the target network entity includes a target interface board, the target interface board is any one of the plurality of interface boards, the resource adjustment policy includes a fifth adjustment policy and a sixth adjustment policy, the fifth adjustment policy indicates a decrease in a quantity of enabled serial links of the target interface board, and the sixth adjustment policy indicates an increase in the quantity of enabled serial links of the target interface board; and
the policy determining module 502 is specifically configured to:
obtain a second historical traffic load rate of the target network entity; and
if the current traffic load rate is lower than the second historical traffic load rate, determine that the resource adjustment policy is the fifth adjustment policy; or
if the current traffic load rate is higher than the second historical traffic load rate, determine that the resource adjustment policy is the sixth adjustment policy.

Optionally, the resource adjustment module 503 is specifically configured to:
if the resource adjustment policy is the fifth adjustment policy, determine, from a plurality of link load rate ranges, a first link load rate range corresponding to the current traffic load rate, where each of the plurality of link load rate ranges corresponds to a link quantity; and
disable at least one serial link in an enabled state on the target interface board based on a first link quantity corresponding to the first link load rate range, so that a quantity of serial links in the enabled state on the target interface board is equal to the first link quantity.

Optionally, the resource adjustment module 503 is specifically configured to:
if the resource adjustment policy is the sixth adjustment policy, determine, from a plurality of link load rate ranges, a second link load rate range corresponding to the current traffic load rate, where each of the plurality of link load rate ranges corresponds to a link quantity; and
enable at least one serial link in a disabled state on the target interface board based on a second link quantity corresponding to the second link load rate range, so that a quantity of serial links in an enabled state on the target interface board is equal to the second link quantity.

Optionally, the plurality of link load rate ranges are obtained by dividing a network traffic processing capability of the target interface board.

In this embodiment of this application, the resource adjustment apparatus determines, based on the current traffic load rate of the target network entity, the resource adjustment policy corresponding to the current network traffic, and then adjusts, based on the resource adjustment policy, the traffic forwarding resources that are in the network device and that are used to forward the current network traffic. In this way, the traffic forwarding resources in the network device are dynamically adjusted based on the current traffic load rate of the target network entity, so that overall power consumption of the network device can vary with the current network traffic. This avoids running of plenty of traffic forwarding resources under a low traffic load condition, thereby reducing power requirements and heat dissipation requirements of the network device under low traffic load while meeting a current network traffic forwarding requirement

It should be noted that when the resource adjustment apparatus provided in the foregoing embodiment dynamically adjusts the traffic forwarding resources in the network device, division of the foregoing functional modules is merely used as an example for description. In actual application, the foregoing functions may be allocated to different functional modules and implemented based on a requirement. In other words, an internal structure of the apparatus is divided into different functional modules to implement all or some of the functions described above. In addition, the resource adjustment apparatus provided in the foregoing embodiment and the resource adjustment method embodiment belong to a same concept. For details about a specific implementation process of the resource adjustment apparatus, refer to the method embodiment. Details are not described herein again.

An embodiment of this application further provides a computer-readable storage medium. The storage medium stores a computer program. When the computer program is run on a network device, the network device is caused to perform the steps of the foregoing resource adjustment method.

An embodiment of this application further provides a computer program product. The computer program product includes a computer program. When the computer program is run on a network device, the network device is caused to perform the steps of the foregoing resource adjustment method.

The resource adjustment method in the foregoing embodiments may be implemented entirely or partially by software, hardware, firmware, or any combination thereof. When software is used to implement the embodiments, all or some of the embodiments may be implemented in a form of a computer program product. The computer program product includes one or more computer instructions. When the computer instructions are loaded and executed on a network device, all or some of the procedures or functions according to embodiments of this application are generated. The network device may be a general-purpose computer, a dedicated computer, a computer network, or another programmable apparatus. The computer program may be stored in a computer-readable storage medium or may be transmitted from a computer-readable storage medium to another computer-readable storage medium. For example, the computer program may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in embodiments of this application may be a non-volatile storage medium, or in other words, may be a non-transitory storage medium.

It should be understood that "a plurality of" in this specification means two or more. In the description of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items having basically same functions and purposes. A person skilled in the art may understand that the terms such as "first" and "second" do not limit a quantity or an execution sequence, and the terms such as "first" and "second" do not indicate a definite difference.

It should be noted that information (including but not limited to a service type of network traffic, service information, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A resource adjustment method, applied to a resource manager in a network device, wherein the network device further comprises a plurality of interface boards and a plurality of switch fabric units, each of the interface boards is connected to at least one of the switch fabric units via at least one serial link, and the switch fabric unit is configured to forward network traffic of one interface board to another interface board; and the method comprises:
obtaining a current traffic load rate of a target network entity, wherein the current traffic load rate indicates a load condition of the target network entity during forwarding of current network traffic, and the target network entity is the plurality of interface boards, the plurality of switch fabric units, or any one of the plurality of interface boards;
determining, based on the current traffic load rate, a resource adjustment policy corresponding to the current network traffic, wherein the resource adjustment policy indicates an adjustment of traffic forwarding resources in the network device during forwarding of the current network traffic, and the traffic forwarding resources comprise serial links of the switch fabric units and the interface boards; and
adjusting the traffic forwarding resources in the network device based on the resource adjustment policy.

2. The method according to claim 1, wherein the target network entity comprises the plurality of interface boards or the plurality of switch fabric units, the resource adjustment policy comprises a first adjustment policy and a second adjustment policy, the first adjustment policy indicates a decrease in a quantity of enabled switch fabric units in the network device, and the second adjustment policy indicates an increase in the quantity of enabled switch fabric units in the network device; and
the determining, based on the current traffic load rate, the resource adjustment policy corresponding to the current network traffic comprises:
obtaining a first historical traffic load rate of the target network entity; and
if the current traffic load rate is lower than the first historical traffic load rate, determining that the resource adjustment policy is the first adjustment policy; or
if the current traffic load rate is higher than the first historical traffic load rate, determining that the resource adjustment policy is the second adjustment policy.

3. The method according to claim 2, wherein the adjusting the traffic forwarding resources in the network device based on the resource adjustment policy comprises:
if the resource adjustment policy is the first adjustment policy, determining, from a plurality of board load rate ranges, a first board load rate range corresponding to the current traffic load rate, wherein each of the plurality of board load rate ranges corresponds to a fabric unit quantity; and
disabling at least one switch fabric unit in an enabled state in the network device based on a first fabric unit quantity corresponding to the first board load rate range, so that a quantity of switch fabric units not disabled in the network device is equal to the first fabric unit quantity.

4. The method according to claim 2, wherein the adjusting the traffic forwarding resources in the network device based on the resource adjustment policy comprises:
if the resource adjustment policy is the second adjustment policy, determining, from a plurality of board load rate ranges, a second board load rate range corresponding to the current traffic load rate, wherein each of the plurality of board load rate ranges corresponds to a fabric unit quantity; and
enabling at least one switch fabric unit in a disabled state in the network device based on a second fabric unit quantity corresponding to the second board load rate range, so that a quantity of switch fabric units in an enabled state in the network device is equal to the second fabric unit quantity.

5. The method according to claim 3 or 4, wherein the plurality of board load rate ranges are obtained by dividing an overall network traffic processing capability of the plurality of interface boards, or the plurality of board load rate ranges are obtained by dividing an overall network traffic processing capability of the plurality of switch fabric units, wherein a division granularity of the plurality of board load rate ranges is greater than a reference granularity.

6. The method according to claim 1, wherein the interface board comprises at least one interface chip, the switch fabric unit comprises at least one switch fabric chip, and the switch fabric chip is configured to forward network traffic of one interface chip to another interface chip; the target network entity comprises the plurality of interface boards or the plurality of switch fabric units, the resource adjustment policy comprises a third adjustment policy and a fourth adjustment policy, the third adjustment policy indicates a decrease in a quantity of enabled switch fabric chips in the network device, and the fourth adjustment policy indicates an increase in the quantity of enabled switch fabric chips in the network device; and
the determining, based on the current traffic load rate, the resource adjustment policy corresponding to the current network traffic comprises:
obtaining a first historical traffic load rate of the target network entity; and
if the current traffic load rate is lower than the first historical traffic load rate, determining that the resource adjustment policy is the third adjustment policy; or
if the current traffic load rate is higher than the first historical traffic load rate, determining that the resource adjustment policy is the fourth adjustment policy.

7. The method according to claim 6, wherein the adjusting the traffic forwarding resources in the network device based on the resource adjustment policy comprises:
if the resource adjustment policy is the third adjustment policy, determining, from a plurality of chip load rate ranges, a first chip load rate range corresponding to the current traffic load rate, wherein each of the plurality of chip load rate ranges corresponds to a chip quantity; and
disabling at least one switch fabric chip in an enabled state in the network device based on a first chip quantity corresponding to the first chip load rate range, so that a quantity of switch fabric chips in the enabled state in the network device is equal to the first chip quantity.

8. The method according to claim 6, wherein the adjusting the traffic forwarding resources in the network device based on the resource adjustment policy comprises:
if the resource adjustment policy is the fourth adjustment policy, determining, from a plurality of chip load rate ranges, a second chip load rate range corresponding to the current traffic load rate, wherein each of the plurality of chip load rate ranges corresponds to a chip quantity; and
enabling at least one switch fabric chip in a disabled state in the network device based on a second chip quantity corresponding to the second chip load rate range, so that a quantity of switch fabric chips in an enabled state in the network device is equal to the second chip quantity.

9. The method according to claim 7 or 8, wherein the plurality of chip load rate ranges are obtained by dividing network traffic processing capabilities of interface chips comprised in the plurality of interface boards, or the plurality of chip load rate ranges are obtained by dividing network traffic processing capabilities of switch fabric chips comprised in the plurality of switch fabric units, wherein a division granularity of the chip load rate ranges is less than a reference granularity.

10. The method according to any one of claims 1 to 9, wherein the method further comprises:
obtaining service level agreement SLA information corresponding to the current network traffic; and
if the SLA information meets an SLA requirement corresponding to the current network traffic, performing the step of adjusting the traffic forwarding resources in the network device based on the resource adjustment policy.

11. The method according to claim 10, wherein the method further comprises:
if the SLA information does not meet the SLA requirement corresponding to the current network traffic, enabling at least one switch fabric unit or switch fabric chip in the disabled state in the network device based on a quantity of target units to be enabled.

12. The method according to claim 1, wherein the target network entity comprises a target interface board, the target interface board is any one of the plurality of interface boards, the resource adjustment policy comprises a fifth adjustment policy and a sixth adjustment policy, the fifth adjustment policy indicates a decrease in a quantity of enabled serial links of the target interface board, and the sixth adjustment policy indicates an increase in the quantity of enabled serial links of the target interface board; and
the determining, based on the current traffic load rate, the resource adjustment policy corresponding to the current network traffic comprises:
obtaining a second historical traffic load rate of the target network entity; and
if the current traffic load rate is lower than the second historical traffic load rate, determining that the resource adjustment policy is the fifth adjustment policy; or
if the current traffic load rate is higher than the second historical traffic load rate, determining that the resource adjustment policy is the sixth adjustment policy.

13. The method according to claim 12, wherein the adjusting the traffic forwarding resources in the network device based on the resource adjustment policy comprises:
if the resource adjustment policy is the fifth adjustment policy, determining, from a plurality of link load rate ranges, a first link load rate range corresponding to the current traffic load rate, wherein each of the plurality of link load rate ranges corresponds to a link quantity; and
disabling at least one serial link in an enabled state on the target interface board based on a first link quantity corresponding to the first link load rate range, so that a quantity of serial links in the enabled state on the target interface board is equal to the first link quantity.

14. The method according to claim 12, wherein the adjusting the traffic forwarding resources in the network device based on the resource adjustment policy comprises:
if the resource adjustment policy is the sixth adjustment policy, determining, from a plurality of link load rate ranges, a second link load rate range corresponding to the current traffic load rate, wherein each of the plurality of link load rate ranges corresponds to a link quantity; and
enabling at least one serial link in a disabled state on the target interface board based on a second link quantity corresponding to the second link load rate range, so that a quantity of serial links in an enabled state on the target interface board is equal to the second link quantity.

15. The method according to claim 13 or 14, wherein the plurality of link load rate ranges are obtained by dividing a network traffic processing capability of the target interface board.

16. A resource adjustment apparatus, comprised in a resource manager in a network device, wherein the network device further comprises each of the interface boards is connected to at least one of the switch fabric units via at least one serial link, and the switch fabric unit is configured to forward network traffic of one interface board to another interface board; and the resource adjustment apparatus comprises:
a load rate obtaining module, configured to obtain a current traffic load rate of a target network entity, wherein the current traffic load rate indicates a load condition of the target network entity during forwarding of current network traffic, and the target network entity is the plurality of interface boards, the plurality of switch fabric units, or any one of the plurality of interface boards;
a policy determining module, configured to determine, based on the current traffic load rate, a resource adjustment policy corresponding to the current network traffic, wherein the resource adjustment policy indicates an adjustment of traffic forwarding resources in the network device during forwarding of the current network traffic, and the traffic forwarding resources comprise serial links of the switch fabric units and the interface boards; and
a resource adjustment module, configured to adjust the traffic forwarding resources in the network device based on the resource adjustment policy.

17. A network device, wherein the network device comprises a resource manager, a main control board, a plurality of interface boards, and a plurality of switch fabric units, each interface board is connected to at least one switch fabric unit via at least one serial link, and the switch fabric unit is configured to forward network traffic of one interface board to another interface board, wherein
the resource manager is disposed on the main control board or at least one of the plurality of interface boards, and is configured to perform the method according to any one of claims 1 to 15.

18. A computer-readable storage medium, wherein the storage medium stores a computer program, and when the computer program is run on the network device, the network device is caused to perform the method according to any one of claims 1 to 15.
